# EUROPEAN PATENT APPLICATION

(11) **EP 1 998 332 A1**
(43) Date of publication of application: **03.12.2008**
(21) Application number: 08007681.3
(22) Date of filing: 21.04.2008
(51) Int. Cl.: G11B 23/50, G11B 7/0055

(54) **A method for destroying data of an optical disk**

(30) Priority: 28.05.2007 CN 200710103087
(71) Applicant: LITE-ON IT Corporation, Neihu Taipei City T'ai pei 114 (TW)
(72) Inventor: Liao, Cheng-Yao, Hsinchu 300 (TW)
(74) Representative: Winkler, Andreas Fritz Ernst

(57) **Abstract**

The present invention discloses a method used in an optical disk drive for destroying data of an optical disk. The optical disk is rotated clockwise and the optical head moves one track per revolution. Then, the optical head is controlled so that the spot size of the emitted laser beam projected on the optical disk is about one track pitch wide and the laser beam has a destroy power. Thereafter, the laser beam with the destroy power is adopted to write the optical disk from the inner diameter to the outer diameter.

## Description

### FIELD OF THE INVENTION

The present invention relates to a method used in an optical disk drive for destroying data of an optical disk, and more particularly to the method used in an optical disk drive which adopts a destroy power for destroying data of an optical disk.

### BACKGROUND OF THE INVENTION

When the optical disk drive was firstly invented, the main function of the optical disk drive is to read data of read-only disks such as CD-Audio, Video CD or DVD Video. Afterward the optical disk drive with recording function and recordable disks were also invented, the application field of the optical disk drive are henceforwad expanded. Consumers may backup or share their personal or business documents with the aid of the recordable optical disk drive and recordable disks.

Once consumers backup their personal or business documents on recordable disks, they would need to backup again periodically or occasionally because of the continuously updating data after some time. When new backup disks are generated, the old backup disks turn to be out of date and useless. Consumers probably discard the old backup disks immediately or keep them for a while and discard them afterward.

Due to environment protection, the discarded disks should be recycled. If consumers do nothing to their discarded disks, it is likely that the contents of these discarded disks may be acquired by a third party or a person who harbors evil intentions which results in significant effects or damages. Therefore it is very important to destroy data of the discarded disks before throw them away.

The conventional method for destroying the optical disk is to crumble the optical disk into pieces by the aid of external force or shredders. Thus data of the discarded disks can not be readable or recoverable which effectively prevents a third party from acquiring the data. However, the above method sometimes leads to some problems. For example, the users may be slashed with the cracked pieces. Furthermore, the users need to expend more money on purchasing shredders with capacity of crumbling the optical disk. In a word, the above method for destroying the optical disk may lead to the problem of safety or expense. Therefore, a solution of destroying the optical disk with the present optical disk drive is the subject matter of the present invention.

### SUMMARY OF THE INVENTION

It is an object of the present invention to provide a method for destroying data of an optical disk, and, specially, to provide a method for destroying data of an optical disk easily, economically and safely so that data of the optical disk are not recoverable or duplicated. Therefore, consumers may recycle their discarded disks without any concern of confidentiality or privacy once they destroy the discarded disks according to the present invention.

In order to attain the foregoing object, a claimed invention provides a method used in an optical disk drive for destroying data of an optical disk. Firstly, the optical disk is rotated clockwise and the optical head moves one track or multi-tracks per revolution. Then, the optical head is controlled so that the spot size of the emitted laser beam projected on the optical disk is about one track pitch wide or numbers of track pitches wide and the laser beam has a destroy power. Thereafter, the laser beam with the destroy power is adopted to write the optical disk from the inner diameter to the outer diameter.

According to the claimed invention, the destroy power is higher than the conventional writing power of the optical disk drive.

According to the claimed invention, the write strategy of the laser beam for writing the optical disk is not restricted by the Specification.

### BRIEF DESCRIPTION OF THE DRAWINGS

The above contents of the present invention will become more readily apparent to those ordinarily skilled in the art after reviewing the following detailed description and accompanying drawings, in which:

FIG 1 is a diagram illustrating the laser spot and tracks of the optical disk according to a first embodiment of the present invention.

FIG. 2 is a diagram illustrating the laser spot and tracks of the optical disk according to a second embodiment of the present invention.

FIG 3A is a diagram illustrating the laser beam moving in a triangle wave and tracks of the optical disk according to a third embodiment of the present invention.

FIG. 3B is a diagram illustrating the laser beam moving in a sine wave and tracks of the optical disk according to a third embodiment of the present invention.

### DETAILED DESCRIPTION OF THE PREFERRED EMBODIMENT

Hereinafter, there will be described embodiments of the present invention.

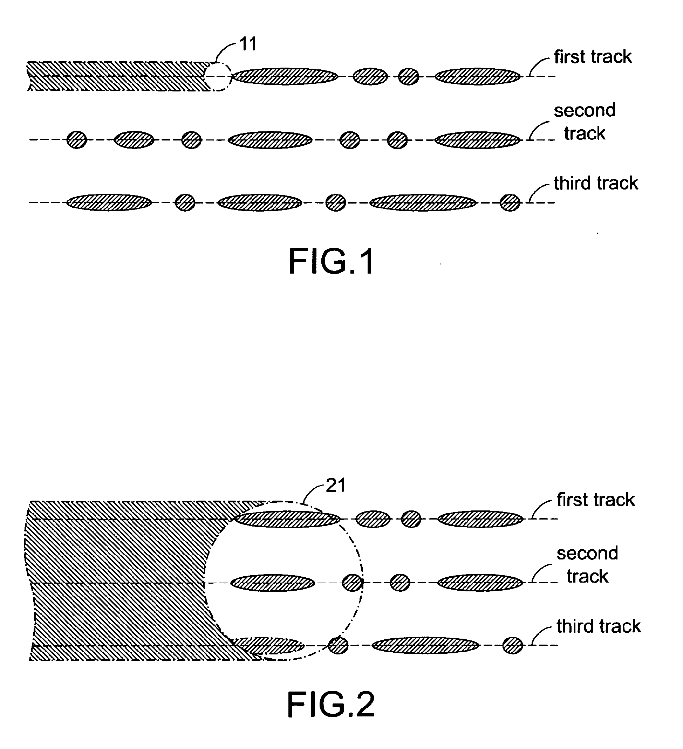

Refer to FIG 1, which illustrates the laser spot and tracks of the optical disk according to a first embodiment of the present invention. The optical disk is loaded into the optical disk drive. The optical head is moved to the position where the optical head is almost on-focus. Moreover, the laser driver is controlled so that the spot size of the emitted laser beam 11 projected on the optical disk is about one track pitch wide as shown in FIG 1 and the laser beam 11 has a destroy power. The destroy power which destroys data of the optical disk may be higher than the conventional writing power of the optical disk drive or is obtained by experiments. Thereafter the optical disk is rotated clockwise by the spindle motor and the optical head moves one track per revolution from the inner diameter to the outer diameter of the optical disk or vice versa. The emitted laser beam 11 with the destroy power thus follows a predetermined direction and destroys one track per revolution of the optical disk. In another word, the emitted laser beam 11 with the destroy power is adopted to deform the recording marks, pits or lands of the optical disk which makes data previously recorded on the optical disk unreadable or unrecoverable. The recording marks, pits or lands of the optical disk are therefore totally destroyed after the emitted laser beam 11 swept through.

Although the method for destroying data of the optical disk is implemented when the optical disk is rotated clockwise by the spindle motor according to the above embodiment of the present invention. However, the optical disk may also be rotated anticlockwise by the spindle motor. Therefore, the emitted laser beam 11 with the destroy power may still follow a predetermined direction and destroy one track per revolution when the optical disk is rotated anticlockwise. The recording marks, pits or lands of the optical disk are hence deformed and data previously recorded on the optical disk are also unreadable or unrecoverable.

Refer to FIG 2, which illustrates the laser spot and tracks of the optical disk according to a second embodiment of the present invention. The optical disk is loaded into the optical disk drive. The optical head is moved to the position where the optical head is de-focus. Moreover, the laser driver is controlled so that the spot size of the emitted laser beam 21 projected on the optical disk is about numbers of track pitches wide and the laser beam 21 has a destroy power. The destroy power which destroys data of the optical disk may be higher than the conventional writing power of the optical disk drive or is obtained by experiments. Thereafter the optical disk is rotated clockwise by the spindle motor and the optical head moves multi-tracks per revolution from the inner diameter to the outer diameter of the optical disk or vice versa. The emitted laser beam 21 with the destroy power thus follows a predetermined direction and destroys numbers of tracks per revolution of the optical disk. In another word, the emitted laser beam 21 with the destroy power is adopted to deform the recording marks, pits or lands of the optical disk which makes data previously recorded on the optical disk unreadable or unrecoverable. The recording marks, pits or lands of the optical disk are therefore totally destroyed after the emitted laser beam 21 swept through.

Although the method for destroying data of the optical disk is implemented when the optical disk is rotated clockwise by the spindle motor according to the above embodiment of the present invention. However, the optical disk may also be rotated anticlockwise by the spindle motor. Therefore, the emitted laser beam 21 with the destroy power may still follow a predetermined direction and destroy numbers of tracks per revolution when the optical disk is rotated anticlockwise. The recording marks, pits or lands of the optical disk are hence deformed and data previously recorded on the optical disk are also unreadable or unrecoverable.

In the above two embodiments, the optical head moves in a sequential track following way, while the optical head moves in a predetermined non-sequential track following way to destroy data of the optical disk in the following third embodiment. The predetermined non-sequential track following may comprise triangle wave track following, sine wave track following or cosine wave track following etc.

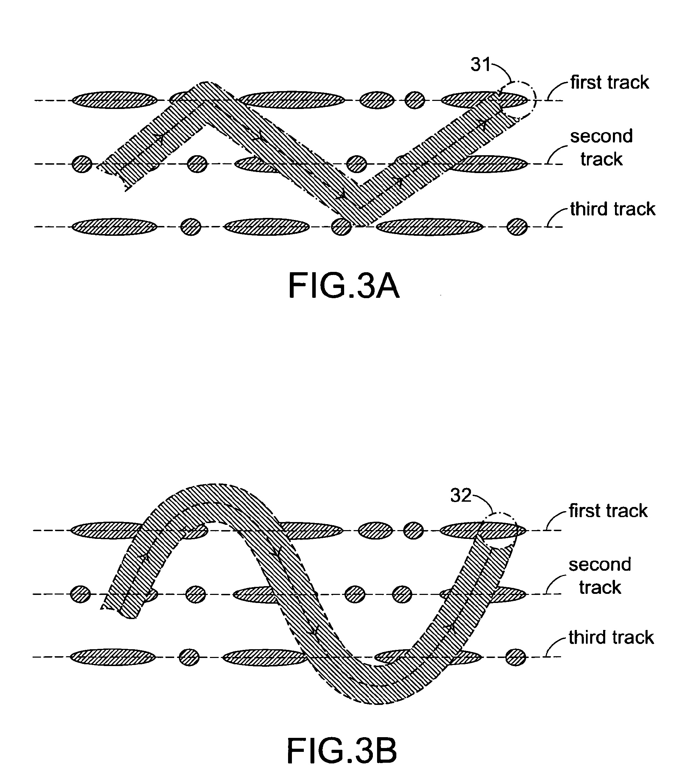

Refer to FIG. 3A, which illustrates the laser beam moving in a triangle wave track following way and tracks of the optical disk according to a third embodiment of the present invention. The optical disk is loaded into the optical disk drive. The optical head is moved to the position where the optical head is almost on-focus. Moreover, the laser driver is controlled so that the spot size of the emitted laser beam 31 projected on the optical disk is about one track pitch wide and the laser beam 31 has a destroy power. The destroy power which destroys data of the optical disk may be higher than the conventional writing power of the optical disk drive or is obtained by experiments. Thereafter the optical disk is rotated clockwise by the spindle motor and the optical head moves one track per revolution in a triangle wave track following way from the inner diameter to the outer diameter of the optical disk or vice versa. The emitted laser beam 31 with the destroy power thus follows a predetermined direction and destroys numbers of tracks per revolution of the optical disk. In another word, the emitted laser beam 31 with the destroy power is adopted to deform the recording marks, pits or lands of the optical disk which makes data previously recorded on the optical disk unreadable or unrecoverable. The recording marks, pits or lands of the optical disk are therefore totally destroyed after the emitted laser beam 31 swept through. The optical disk drive cannot recover data of the destroyed optical disk.

Besides, though the optical head moves one track per revolution to destroy data of the optical disk according to the above embodiment of the present invention, the optical head may also move multi-tracks per revolution to destroy data of the optical disk. And the spot size of the emitted laser beam projected on the optical disk may be numbers of track pitches wide.

Refer to FIG 3B, which illustrates the laser beam moving in a sine wave track following way and tracks of the optical disk according to a third embodiment of the present invention. The optical disk is loaded into the optical disk drive. The optical head is moved to the position where the optical head is almost on-focus. Moreover, the laser driver is controlled so that the spot size of the emitted laser beam 32 projected on the optical disk is about one track pitch wide and the laser beam 32 has a destroy power. The destroy power which destroys data of the optical disk may be higher than the conventional writing power of the optical disk drive or is obtained by experiments. Thereafter the optical disk is rotated clockwise by the spindle motor and the optical head moves one track per revolution in a sine wave track following way from the inner diameter to the outer diameter of the optical disk or vice versa. The emitted laser beam 32 with the destroy power thus follows a predetermined direction and destroys one track per revolution of the optical disk. In another word, the emitted laser beam 32 with the destroy power is adopted to deform the recording marks, pits or lands of the optical disk which makes data previously recorded on the optical disk unreadable or unrecoverable. The recording marks, pits or lands of the optical disk are therefore totally destroyed after the emitted laser beam 31 swept through. The optical disk drive cannot recover data of the destroyed optical disk.

Besides, the optical head moves one track per revolution to destroy data of the optical disk according to the above embodiment of the present invention, the optical head may also moves multi-tracks per revolution to destroy data of the optical disk. And the spot size of the emitted laser beam projected on the optical disk may be numbers of track pitches wide.

Moreover, although the method for destroying data of the optical disk is implemented when the optical disk is rotated clockwise by the spindle motor according to the above embodiment of the present invention. However, the optical disk may also be rotated anticlockwise by the spindle motor. Therefore, the emitted laser beam with the destroy power may still follow a predetermined direction and destroy numbers of tracks per revolution when the optical disk is rotated anticlockwise. The recording marks, pits or lands of the optical disk are hence deformed and data previously recorded on the optical disk are also unreadable or unrecoverable.

In view of the foregoing, next, there will be described the fourth embodiment and the fifth embodiment.

In the fourth embodiment, the optical disk is loaded into the optical disk drive. The optical head is then moved to the position where the optical head is almost on-focus. Moreover, the laser driver is controlled so that the spot size of the emitted laser beam projected on the optical disk is about one track pitch wide and the laser beam has a destroy power. The destroy power which destroys data of the optical disk may be higher than the conventional writing power of the optical disk drive or is obtained by experiments. Thereafter the optical disk is rotated clockwise by the spindle motor and the optical head moves one track per revolution or multi-tracks per revolution at random from the inner diameter to the outer diameter of the optical disk or vice versa. The emitted laser beam with the destroy power thus follows a predetermined direction and destroys one track per revolution or numbers of tracks per revolution at random. In another word, the emitted laser beam with the destroy power is adopted to deform the recording marks, pits or lands of the optical disk which makes data previously recorded on the optical disk unreadable or unrecoverable.

In addition, the optical head moves in a random pattern to destroy data of the optical disk according to the above embodiment of the present invention, the optical head may also moves in a predetermined pattern (one track per revolution and multi-tracks per revolution in turn for example) to destroy data of the optical disk.

Although the method for destroying data of the optical disk is implemented when the optical disk is rotated clockwise by the spindle motor according to the above embodiment of the present invention. However, the optical disk may also be rotated anticlockwise by the spindle motor. Therefore, the emitted laser beam with the destroy power may still follow a predetermined direction and destroy a predetermined tracks per revolution when the optical disk is rotated anticlockwise. The recording marks, pits or lands of the optical disk are hence deformed and data previously recorded on the optical disk are also unreadable or unrecoverable.

In the fifth embodiment, the optical disk is loaded into the optical disk drive. The optical head is then moved to the position where the optical head is on-focus. Moreover, the laser driver is controlled so that the laser beam has a destroy power. The destroy power which destroys data of the optical disk is a conventional erasing power or is higher than the conventional writing power of the optical disk drive. The destroy power may also be obtained by experiments. Thereafter the optical head writes or erases a data area where defines the file system or address information of the optical disk with the destroy power. The above mentioned data area is, for example, the TOC (table of content) of a CD or the defect management area of a DVD-RAM disk. Once the above mentioned data area is destroyed, data previously recorded on the optical disk cannot be correctly recoverable or correctly readable.

In comparison to the other embodiments, the fifth embodiment describes a quick mode for destroying data of the optical disk. Although it doesn't destroy the optical disk thoroughly, it also indeed attains the goal that the destroyed disk is unreadable or unrecoverable by the optical disk drive. Thus when the function of destroying the optical disk is added to the optical disk drive, a quick mode and a full mode may be set wherein the quick mode adopting the fifth embodiment while the full mode adopting the other embodiments of the present invention. Hence consumers may choose the quick mode or the full mode according to their needs.

It is to be noted that in above embodiments the emitted laser beam with the destroy power is adopted to deform the recording marks, pits or lands of the optical disk which makes data previously recorded on the optical disk unreadable or unrecoverable. Wherein the optical disk is a recordable disk such as DVD-R/+R disk, or a rewritable disk such as DVD-RW/+RW disk, but not limited to the above two types of disks. Besides, when destroying data of the optical disk, the write strategy of the emitted laser beam is not restricted by the Specification. For example, when writing a CD-RW disk, the write strategy specified in the orange book is multi-pulse. However, a single-pulse write strategy may also be adopted to destroy data of the optical disk according to the present invention. For another example, when writing a CD-R disk, the write strategy specified in the orange book is single-pulse. However, a multi-pulse write strategy may also be adopted to destroy data of the optical disk according to the present invention.

Thus, the virtue of the present invention is setting a destroy power and a predetermined tracks such as one track per revolution or multi-tracks per revolution to destroy data of the optical disk by the present optical disk drive. The optical disk is therefore unreadable or unrecoverable by the optical disk drive. Consumers may recycle the destroyed disks without any concerns. Extra expense for buying scissors or shredders to crumble the optical disk is no more needed. Manufacturers of the optical disk drive also do not need extra expense to fulfill the present invention. The present invention indeed effectively raises the functionality of the optical disk drive.

Another virtue of the present invention is adopting the present optical disk drive for destroying data of the optical disk. In normal circumstances, the optical head inside the optical disk drive is adopted to read data of the optical disk or to record data on the optical disk. However, the present invention adopts the present optical head to destroy the physical structure of the optical disk or the logical structure of the optical disk such as data area where defines address information. Therefore the data of the optical disk is unreadable or unrecoverable even by the aid of ECC (Error Correction Codes) mechanism.

The third virtue of the present is providing a quick mode for destroying the optical disk. The optical head writes or erases the data area where defines the file system or address information of the optical disk with the destroy power. Once the above mentioned data area is destroyed, data previously recorded on the optical disk cannot be correctly recoverable or correctly readable. In comparison to the full mode, the quick mode spends less time for destroying the optical disk. Consumers may choose the quick mode or the full mode according to their needs.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realising the invention in diverse forms thereof.

## Claims

1. A method for destroying data of an optical disk used in an optical disk drive, wherein the optical disk drive comprises a spindle motor which rotates the optical disk, and an optical head which controls the focus position and the emitted power of the laser beam for writing and reading the optical disk, comprising:
rotating the optical disk in a specified direction so that the optical head moves a predetermined number of tracks per revolution of the optical disk;
controlling the optical head so that the laser beam with a destroy power projects on the optical disk with a predetermined spot size; and
writing the optical disk sequentially in a predetermined direction with the laser beam.

2. The method according to claim 1 wherein the predetermined number of tracks is one track and the predetermined spot size of the laser beam is about one track pitch wide, or the predetermined number of tracks is multi-tracks and the predetermined spot size of the laser beam is about numbers of track pitches wide, or the predetermined number of tracks is a random number of tracks.

3. The method according to claim 1 wherein the destroy power is higher than the conventional writing power of the optical disk drive and the destroy power is obtained by experiments.

4. The method according to claim 1 wherein the predetermined direction is from the inner diameter to the outer diameter of the optical disk or from the outer diameter to the inner diameter of the optical disk.

5. A method for destroying data of an optical disk used in an optical disk drive, wherein the optical disk drive comprises a spindle motor which rotates the optical disk, and an optical head which controls the focus position and the emitted power of the laser beam for writing and reading the optical disk, comprising:
rotating the optical disk in a specified direction so that the optical head moves a predetermined number of tracks per revolution of the optical disk;
controlling the optical head so that the laser beam with a destroy power projects on the optical disk with a predetermined spot size; and
writing the optical disk with the laser beam in a predetermined direction according to a predetermined non-sequential track following.

6. The method according to claim 5 wherein the predetermined number of tracks is one track and the predetermined spot size of the laser beam is about one track pitch wide, or the predetermined number of tracks is multi-tracks and the predetermined spot size of the laser beam is about numbers of track pitches wide.

7. The method according to claim 5 wherein the destroy power is higher than the conventional writing power of the optical disk drive and the destroy power is obtained by experiments.

8. The method according to claim 5 wherein the predetermined non-sequential track following is a triangle wave or a sine wave.

9. The method according to claim 5 wherein the predetermined direction is from the inner diameter to the outer diameter of the optical disk or from the outer diameter to the inner diameter of the optical disk.

10. A method for destroying data of an optical disk used in an optical disk drive, wherein the optical disk drive comprises an optical head which controls the focus position and the emitted power of the laser beam for writing and reading the optical disk, comprising:
controlling the optical head so that the laser beam with a destroy power focuses on the optical disk; and
writing a data area where defines file system or address information of the optical disk with the laser beam.

11. The method according to claim 10 wherein the destroy power is the conventional erasing power of the optical disk drive.

12. The method according to claim 10 wherein the destroy power is higher than the conventional writing power of the optical disk drive and is obtained by experiments.

13. The method according to claim 10 wherein the data area where defines file system or address information of the optical disk is the TOC (table of content) of a CD or the defect management area of a DVD-RAM disk.
